# EUROPEAN PATENT APPLICATION

(11) **EP 3 109 691 A1**
(43) Date of publication of application: **28.12.2016**
(21) Application number: 16151526.7
(22) Date of filing: 15.01.2016
(51) Int. Cl.: G02C 5/14, G02C 11/00, G02C 3/00

(54) **SUN GLASSES**

(30) Priority: 23.06.2015 US 201514746874
(71) Applicant: Tedtaotao Balabagno, George, Grayslake, IL 60030 (US); Tedtaotao Balabagno Mauga, Gloria, Grayslake, IL 60030 (US)
(72) Inventor: Tedtaotao Balabagno, George, Grayslake, IL 60030 (US); Tedtaotao Balabagno Mauga, Gloria, Grayslake, IL 60030 (US)
(74) Representative: Romano, Giuseppe

(57) **Abstract**

The disclosed herein is an eyewear unit having an ear-free frame structure, which has an ear-free frame structure comprises of a an eyeglass attached with said ear-free frame structure, a nose bridge, a left and right rim sections extending from the nose bridge, a temple structure to hold said frame structure to the head of the wearer wherein said temple structure holds said frame structure at the temple region of a wearer. The frame structure further comprises of an adjustable headband with optional attachable-detachable means, a temporal frame leg extensions, a high tech computerized microchip installed and/or built in said frame, a built-in communication device, an earpiece, a computerized display, a magnetic inset eye frame and a telescopic eye frame extension and a hinge for attaching said temple structure to said frame structure.

## Description

### FIELD OF THE INVENTION

This invention relates to spectacles or sunglasses and more particularly sunglasses having short temples and modified frame type.

### BACKGROUND

A typical pair of sunglasses includes a frame and two lenses. The frame includes a support section and two temples. The support section is configured to support the two optical lenses. When worn by the wearer, the support section extends across and is held to the face of the wearer by the two temples and a nose bridge defined by the support section. Each temple extends from an end of the support section along a side of the wearer's head to and between the ear and the rest of the head. A distal end of the temple is configured to rest along a portion of the (outer or external) ear such that the temple, along with the nose bridge, helps to hold and support the pair of sunglasses to the face of wearer.

Prior art Patent Application No. WO 1988007219 A1 discloses a frameless, sheet like structure sunglasses, which are devoid of temples but this design is difficult to be maintained over the wearers face.

Further prior art Patent No. US 5302977 A discloses a self- adjusting ear steam structure but still this eyewear requires the placement of temple over the wearer's ears.

More complicated temple designs have been proposed wherein eyewear includes adjustable temples, such that a wearer can manually adjust the degree of bias of the temples against the head, for example, U.S. Patent Nos. 4,204,749 and 4,848,891. Additionally, it has been proposed to secure eyewear better by including frictionally engaging members on a portion of the temples, for example, U.S. Patent Nos. 4,204,749 and 5,054,903.

The wearer often feels discomfort due the pressure exerted by the temples over the ears and along the sides of head. The current invention disclosure specifically provides a solution to mitigate the problem in existing in prior art inventions which is mainly the discomfort caused due the pressure created by the temples of the eyewear over the ears of user.

The present invention provides a modified eyewear, sunglasses that include the temple and significantly modified eyewear frame. It is believed that the temple according to the embodiments described herein is an improvement in strength and/or appearance over the conventional temple having the two separately molded pieces that are configured to snap together.

The subject matter claimed herein is not limited to embodiments that solve any disadvantages or that operate only in environments such as those described above. Rather, this background is only provided to illustrate one example technology area where some embodiments described herein may be practiced.

### BRIEF SUMMARY OF THE INVENTION

The primary objective of the present invention is to provide an eyewear unit having an ear-free frame structure, which can be considerably reduced and can be customized in a manner that the eyewear acquired an ear free frame structure, which reduced the discomfort caused due to the exertion of pressure by the temples over the individual's ears.

In a preferred embodiment of the invention the eyewear unit that has an ear-free frame structure comprises of a an eyeglass attached with said ear-free frame structure, a nose bridge, a left and right rim sections extending from the nose bridge, a temple structure to hold said frame structure to the head of the wearer wherein said temple structure holds said frame structure at the temple region of a wearer. The frame structure further comprises of an adjustable headband with optional attachable- detachable means, a temporal frame leg extensions, a high tech computerized microchip installed and/or built in said frame, a built-in communication device, an earpiece, a computerized display, a magnetic inset eye frame and a telescopic eye frame extension and a hinge for attaching said temple structure to said frame structure.

In one embodiment of the invention the adjustable headband that has an optional attachable- detachable means is provided by the use of a velcro and/or an elastic. The built-in communication device of the frame structure of the eyewear unit has a radio communication system and/or a cell phone. Further the earpiece attached to the eyewear unit further comprises of a Bluetooth attachment and is retractable.

Furthermore according to the invention the computerized display of the eyewear uses technology 3-D and/or 4-D technology. The frame structure is an assorted color interchangeable short temporal frame with a plurality of shape and design like rounded, square, heart, triangle, cat-eye, aviator and oval forms, classic and modern shapes that matches the shape of a face. The eyeglass of the eyewear unit is polarized, repels UVA (ultraviolet A) and/or, UVB (ultraviolet B) and has night vision.

The summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

These together with other objects of the invention, along with the various features of novelty which characterize the invention, are pointed out with particularity in the disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

The drawings constitute a part of this specification and include exemplary embodiments to the invention, which may be embodied in various forms. It is to be understood that in some instances various aspects of the invention may be shown exaggerated or enlarged to facilitate an understanding of the invention.
FIG. 1 depicts a perspective back view of a pair of sunglasses according to an exemplary embodiment.
FIG. 2 depicts a top view of the sunglasses and various components of temple assembly.
FIG. 3 depicts a front view of the sunglasses.
FIG. 4 depicts the temple assembly.

### DETAILED DESCRIPTIONS OF THE INVENTION

The following is a detailed description of example embodiments of the invention depicted in the accompanying drawings. The example embodiments are in such detail as to clearly communicate the invention. However, the amount of detail offered is not intended to limit the anticipated variations of embodiments; but, on the contrary, the intention is to cover all modifications, equivalents, and alternatives falling within the spirit and scope of the present invention as defined by the appended claims. The detailed descriptions below are designed to make such embodiments obvious to a person of ordinary skill in the art.

Embodiments of the present invention relate to a new and improved temple, sunglasses that include a new and improved temple. The eyewear unit that has an ear-free frame structure comprises of a an eyeglass attached with said ear-free frame structure, a nose bridge, a left and right rim sections extending from the nose bridge, a temple structure to hold said frame structure to the head of the wearer wherein said temple structure holds said frame structure at the temple region of a wearer. The frame structure further comprises of an adjustable headband with optional attachable- detachable means, a temporal frame leg extensions, a high tech computerized microchip installed and/or built in said frame, a built-in communication device, an earpiece, a computerized display, a magnetic inset eye frame and a telescopic eye frame extension and a hinge for attaching said temple structure to said frame structure. It is not restricted to a specific season whether it is summer or winter, it can be used on any weather and environmental conditions, it is designed to withstand the elements like wind, snow, rain etc. Also it can be used for all occasions like sports, professional, for eye health (Prescription Eyewear), in entertainment industry, for industrial work environment, daily eye wear usage both outdoor and indoor.

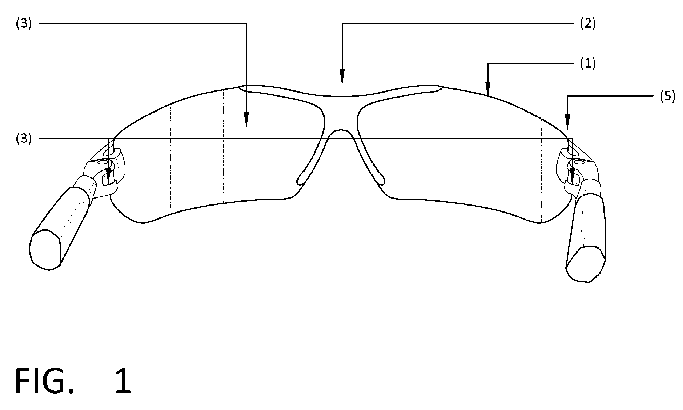

Sunglasses may vary in function and design. For example, Sunglasses may include prescription glasses, safety glasses, or combination thereof. Sunglasses may include big frames, minimal frames and/or small lenses or large lenses. Fig. 1 illustrates an example of a pair of Sunglasses that includes a pair temple and various other parts according to present invention. However, it is understood that the pair of Sunglasses of **Fig.1** is only an example and that the function and design of the Sunglasses that may incorporate or use a temple according to an embodiment of the present invention may vary.

Further, the eyewear can have different shades and colors of frames that may be transparent, opaque, with different designs like natural wood, wood-grain, acetate, and in different colors like bright colors and vibrant hues, dark and light shades, tortoise shell, silhouettes, matt finishes, two tones. Also the eyewear may have a variety of size and width of short temporal frames and can be used unisexually; it conforms to different face shapes and size of a person, oversize, slim line, semi-rimless, thin, thick, flexible, heavy duty, impact proof, lightweight, scratch proof, high strength. And can be manufactured with different material composition. Imaginative patterns, Wood-grain Pattern, metal, plastic, titanium, stainless steel, Fabrics and Prints and Texture, Made out of High Quality Durable Flexible Material, Earth Friendly, Natural Elements, Grips softly and comfortably around the eyes with temporal frame leg support.

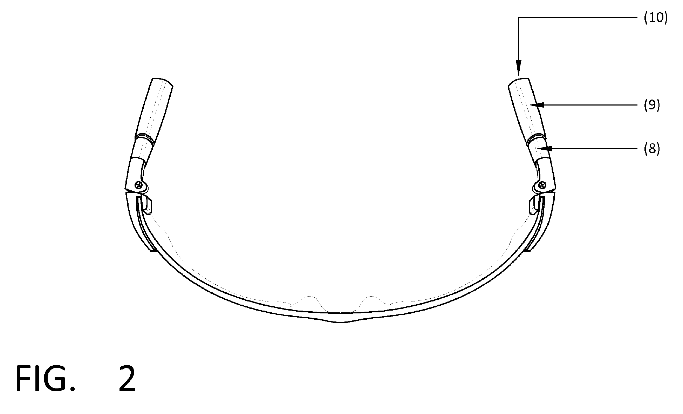

The current invention sunglasses include a lens **1,** a bridge (brow piece) **2,** a pair of nose piece **3** and two temple assemblies **4** connected to frame edge via hinge **5.** The bridge (brow piece) is configured be secure the lens. The two temple assemblies are coupled to the frame by two hinges. Each temple assembly as shown in Fig. 2 includes a temple substrate **6,** a covered portion 7, and a metal insert **8.**

An example embodiment includes sunglasses with temple assemblies that comfortably retain and secure the eyewear to the user. The temple assemblies are configured to reduce or eliminate discomfort due to pressure imposed against the ears or head of the user. The temple assemblies include a metal insert and a temple substrate. The metal insert may be located within the temple substrate and is configured to apply an inward force against the head of a user. The position of the temple is much ahead of ears of the user. Hence it's an ear-free frame.

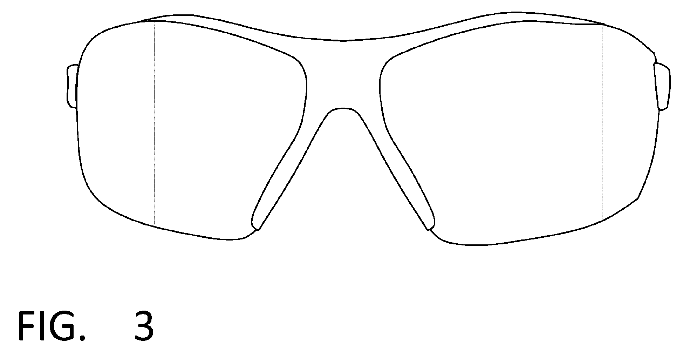

With specific reference to **Fig. 1****,** the sunglasses may be composed of one or more metals, one or more polymers, copolymer, reinforced polymers and/or polymer blends. The material selection may be based, at least partially, on considerations such as overall stresses imposed during use, durability during the life of the eyewear. **Fig 2** shows the top view illustrating temple assembly and **Fig. 3** shows front view of the sunglasses disclosed herein respectively.

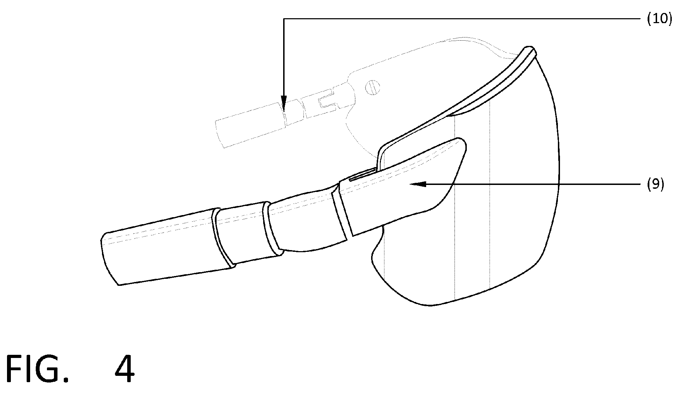

In one embodiment of the invention the adjustable headband that has an optional attachable- detachable means is provided by the use of a Velcro and/or an elastic. The built-in communication device of the frame structure of the eyewear unit has a radio communication system and/or a cell phone. Further the earpiece attached to the eyewear unit further comprises of a Bluetooth attachment and is retractable. **Fig. 4** illustrate the left temple assembly **8,** however the right temple assembly **9** includes similar features and components in a symmetric structure. Also the computerized display of the eyewear uses technology 3-D and/or 4-D technology. The frame structure is an assorted color interchangeable short temporal frame with a plurality of shape and design like rounded, square, heart, triangle, cat-eye, aviator and oval forms, classic and modern shapes that matches the shape of a face. The eyeglass of the eyewear unit is polarized, repels UVA (ultraviolet A) and/or, UVB (ultraviolet B) and has night vision.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Although the invention has been explained in relation to its preferred embodiment, it is to be understood that many other possible modifications and variations can be made without departing from the spirit and scope of the invention.

## Claims

1. A eyewear unit having an ear-free frame structure, comprising:
an eyeglass attached with said ear-free frame structure;
a nose bridge;
a left and right rim sections extending from the nose bridge;
a temple structure to hold said frame structure to the head of the wearer wherein said temple structure holds said frame structure at the temple region of a wearer; and
a means for attaching said temple structure to said frame structure.

2. The eyewear unit as claimed in claiml, wherein said frame structure further comprises of an adjustable headband with optional attachable- detachable means;
a temporal frame leg extensions;
a high tech computerized microchip installed and/or built in said frame;
a built-in communication device;
a earpiece;
a computerized display;
a magnetic inset eye frame; and
a telescopic eye frame extension.

3. The adjustable headband as claimed 2, wherein said optional attachable- detachable means is provided by the use of a Velcro.

4. The adjustable headband as claimed 2, wherein said optional attachable- detachable means is provided by the use of an Elastic

5. The built-in communication device as claimed in claim 2, wherein said communication device has a radio communication system.

6. The built-in communication device as claimed in claim 2, wherein said communication device is a cell phone.

7. The earpiece as claimed in claim 2, wherein said earpiece further comprises of a Bluetooth attachment.

8. The earpiece as claimed in claim 2, wherein said earpiece is retractable.

9. The computerized display as claimed in claim 2, wherein said display uses technology 3-D and/or 4-D technology.

10. The eyewear unit as claimed in claiml, wherein said means for attaching said temple structure is a hinge.

11. The eyewear unit as claimed in claiml, wherein said frame structure is a assorted color interchangeable short temporal frame.

12. The eyewear unit as claimed in claim1, wherein said frame structure has a plurality of shape and design.

13. The eyewear unit as claimed in claiml, wherein said eyeglass is polarized.

14. The eyewear unit as claimed in claiml, wherein said eyeglass repels UVA (ultraviolet A) and/or, UVB (ultraviolet B).

15. The eyewear unit as claimed in claiml, wherein said unit with a night vision.
